(19) Europäisches Patentamt
European Patent Office
Office européen des brevets

(11) **EP 4 760 426 A1**

(12) **EUROPEAN PATENT APPLICATION**

(43) Date of publication:
**17.06.2026 Bulletin 2026/25**

(21) Application number: **24307104.0**

(22) Date of filing: **13.12.2024**

(51) International Patent Classification (IPC):
***G05B 19/418*** *(2006.01)*

(52) Cooperative Patent Classification (CPC):
**G05B 19/4184;** G05B 2219/24186

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **SCHNEIDER ELECTRIC INDUSTRIES
SAS**
**92500 Rueil-Malmaison (FR)**

(72) Inventors:
• **BRÜCK, Antoine**
**06670 LA ROQUETTE-SUR-VAR (FR)**
• **MEEGAN, Kevin**
**HOVE (GB)**
• **JOHNSON, Alexander**
**HOUSTON, 77063 (US)**

(74) Representative: **Plasseraud IP**
**104 Rue de Richelieu**
**CS92104**
**75080 Paris Cedex 02 (FR)**

(54) **METHOD FOR MANAGING AN AUTOMATION SYSTEM AND APPARATUS FOR IMPLEMENTING THE SAME**

(57)    A method for managing a first node of a control network of an industrial automation system, the method being implemented by the first node, is provided, which comprises: obtaining configuration information that comprises node pairing information related to pairing with one or more other nodes of the control network by performing a redundancy pairing procedure with the first node for synchronizing a first set of one or more states of the first node between the first node and the one or more other nodes of the control network, wherein the node pairing information comprises pair node information that identifies a second node of the control network, and spare node identification information that identifies a spare node of the control network, determining that the second node cannot be paired with the first node, and upon determining that the second node cannot be paired with the first node, performing the redundancy pairing procedure for pairing with the spare node for synchronizing a second set of one or more states of the first node between the first node and the spare node.

21

Obtaining configuration information that comprises node pairing information related to pairing with one or more other nodes of the control network by performing a redundancy pairing procedure with the first node for synchronizing a first set of one or more states of the first node between the first node and the one or more other nodes of the control network, the node pairing information comprising pair node information that identifies a second node of the control network and spare node identification information that identifies a spare node of the control network

22

Determining that the second node cannot be paired with the first node

23

Upon determining that the second node cannot be paired with the first node, performing the redundancy pairing procedure for pairing with the spare node for synchronizing a second set of one or more states of the first node between the first node and the spare node

20

**FIG. 4**

EP 4 760 426 A1

**Description**

The present disclosure relates to the field of automation system management, in particular highly available (HA) automation systems.

Automation systems are designed to provide automation of IT processes (e.g. workload processes, data communication, etc.) executed for operating industrial sites, such as manufacturing plants, or equipment used therein. In automation systems, the availability of a system is typically measured as a function of two different performance metrics: the mean-time between failures (MTBF), and the mean-time to Repair (MTTR).

Advanced automation system architectures typically include an automation control which provides control functions such as fault tolerance, which has evolved in the recent years into a so-called "high-availability" feature. High availability applies to approaches that raise availability above what one would expect from a typical controller.

In an HA automation system architecture where controllers are configured to execute a software application (possibly in real-time or near real-time), the application is typically executed on a pair of controllers or even with more than two controllers. This ensures process continuity, that is, that a continuous process will not be interrupted in case of a single failure, meaning that the system has a certain level of fault tolerancy. High-availability is typically used in many automation segments, such as for example Oil&Gas where a one-day interruption of the process can cost millions of dollars.

Therefore it might be desirable to improve the scheme that provides high-availability in industrial automation control systems.

There is therefore a need for providing an improved automation system management scheme and apparatus implementing the same that address at least some of the above-described drawbacks and shortcomings of the conventional technology in the art.

It is an object of the present subject disclosure to provide an improved automation system management scheme and apparatus implementing the same.

To achieve these objects and other advantages and in accordance with the purpose of the present subject disclosure, as embodied and broadly described herein, in one aspect of the present subject disclosure, a method for managing a first node of a control network of an industrial automation system is proposed. The method, implemented by the first node, comprises: Obtaining configuration information that comprises node pairing information related to pairing with one or more other nodes of the control network by performing a redundancy pairing procedure with the first node for synchronizing a first set of one or more states of the first node between the first node and the one or more other nodes of the control network, wherein the node pairing information comprises pair node information that identifies a second node of the control network, and spare node identification information that identifies a spare node of the control network, determining that the second node cannot be paired with the first node; and upon determining that the second node cannot be paired with the first node, performing the redundancy pairing procedure for pairing with the spare node for synchronizing a second set of one or more states of the first node between the first node and the spare node.

Through the configuration of a first node that may operate in a pair of redundant nodes to provide high-availability with one or more nodes to pair with and a spare node to be used in case the one or more nodes to pair with cannot be paired with, the proposed method advantageously provides a self-repair mechanism that can be used in a highly-available controller.

In contrast to the usual approach to improve availability in an automation system which involves duplicating controllers on a one-to-one basis in order to increase the mean-time between failures (MTBF metric), the proposed scheme advantageously allows improving the availability of the system through reducing the mean-time to repair (MTTR metric) in an automation system.

In one or more embodiments, the proposed method may further comprise: Performing the redundancy pairing procedure with the second node for synchronizing one or more states between the first node and the second node.

The proposed scheme may advantageously be used for various situations with respect to determining that the second node cannot be paired with the first node: In some embodiments, the determining that the second node cannot be paired with the first node may comprise: determining, once the first node is paired with the second node through completion of the redundancy pairing procedure between the first node and the second node, that the second node is no longer paired with the first node.

In some embodiments, determining that the second node cannot be paired with the first node may comprise detecting a failure of the second node.

In some embodiments, determining that the second node cannot be paired with the first node may comprise determining that the second node cannot perform the redundancy pairing procedure with the first node.

In some embodiments, determining that the second node cannot perform the redundancy pairing procedure with the first node may comprise detecting one or more of: the second node is not capable of performing the pairing procedure, and the second node is not available for performing the redundancy pairing procedure. The proposed scheme may therefore advantageously be used in cases where the second node is in failure.

In one or more embodiments, the node pairing information may comprise a prioritized list of one or more pair nodes according to which the first node is to engage into pairing with a node in the list according to a position of the node in the list.

In one or more embodiments, the node pairing information may comprise a list of one or more pair nodes according to which the first node is to engage into pairing with a node in the list. In some embodiments, the spare node may be signaled through a predefined position in the list.

In one or more embodiments, the node pairing information may be comprised in the configuration information that is common to a plurality of nodes of the control network. In some embodiments, the configuration information may be received by the first node.

In one or more embodiments, performing the pairing procedure with a pair candidate node may comprise: sending, to the pair candidate node, a request for pairing, receiving, from the pair candidate node, a pairing confirm message, and performing state synchronization between the first node and the pair candidate node to synchronize a set of one or more states of the first node between the first node and the pair candidate node.

In another aspect of the present subject disclosure, an apparatus is proposed, which comprises a processor, a memory operatively coupled to the processor, and network interfaces to communicate in a data communication network, wherein the apparatus is configured to perform a method for managing a first node of a control network of an industrial automation system as proposed in the present subject disclosure.

In yet another aspect of the present subject disclosure, a non-transitory computer-readable medium encoded with executable instructions which, when executed, causes an apparatus comprising a processor operatively coupled with a memory, to perform a method for managing a first node of a control network of an industrial automation system as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method for managing a first node of a control network of an industrial automation system as proposed in the present subject disclosure, is proposed. In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figures 1 illustrates an exemplary industrial automation system in which the proposed method may be applied in accordance with one or more embodiments;

Figure 2 illustrates an exemplary industrial automation system in which the proposed method may be applied in accordance with one or more embodiments;

Figure 3 illustrates a pair of synchronized controllers in accordance with one or more embodiments;

Figure 4 is a block diagram illustrating an exemplary method for managing a first node of a control network of an industrial automation system in accordance with one or more embodiments;

Figures 5a is a block diagram that illustrates an exemplary industrial automation system in accordance with one or more embodiments;

Figure 5b is a flow diagram that illustrates an exemplary design, configuration and deployment workflow in accordance with one or more embodiments;

Figure 5c is a flow diagram that illustrates an exemplary operational workflow during runtime in accordance with one or more embodiments;

Figure 6 illustrates an exemplary controller apparatus according to one or more embodiments.

## Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, machine code, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be indifferently used to indicate that two or more elements are in direct physical or electrical contact with each other, or two or more elements are not in direct contact with each other, but yet still co-operate or interact with each other.

In the following description and claims, the terms "payload", "payload data", "message", "packet", and "data packet" may be indifferently used, and may include data blocks, protocol data units or any unit of data that may be routed or transmitted between nodes or stations or across a network. A packet may include a group of bits, which may include one or more address fields, control fields and data, for example. A data block may be any unit of data or information bits.

For the purposes of the present disclosure, the term "server" is used herein to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and applications software which support the services provided by the server. Servers may vary widely in configuration or capabilities, but generally a server may include one or more central processing units and memory. A server may also include one or more mass storage devices, one or more power supplies, one or more wired or wireless network interfaces, one or more input/output interfaces, or one or more operating systems, such as Windows Server, Mac OS X, Unix, Linux, FreeBSD, or the like.

For the purposes of the present disclosure, a "computer network" should be understood to refer to a network that may couple devices (also referred to herein as "nodes") so that data communications may occur between devices, including between wireless devices coupled via a wireless network, for example. A network may also include mass storage, such as network attached storage (NAS), a storage area network (SAN), or other forms of computer or machine readable media, for example, and may include or be connected to a server. A network may include the Internet, one or more local area networks (LANs), one or more wide area networks (WANs), wireline type connections, wireless type connections, cellular, such as carrier telephone lines, optical fibers, synchronous optical networks, synchronous digital hierarchy links, powerline communication links (e.g. IEEE 61334, IEEE P1901.2), Ethernet, Bluetooth, Bluetooth Low Energy (BLE) or Bluetooth Smart, WiFi or any connection based on a IEEE802.11x protocols, ZigBee or any connection based on the IEEE802.15.4 protocol, Z-Wave, 6LowPAN (IPv6 Low-power wireless Personal Area Network), Thread, Sigfox, Neul, LoRa, any NFC connection, 2G (including GSM/GPRS/EDGE)/3G (including UMTS/HSPA)/4G (including LTE and LTE-Advanced)/5G cellular, or any combination thereof. Various types of devices, for example gateways, may be made available to provide an interoperable capability for differing architectures or protocols used in the network. Any number of nodes, devices, apparatuses, links, interconnections, etc. may be used in a computer network according to the present subject disclosure.

A communication link or channel may include, for example, analog telephone lines, full or fractional digital lines, wireless links including satellite links, or other communication links or channels, such as may be known to those skilled in the art.

In the following description and claims, the terms "coupled" and "connected", along with their derivatives, may be used. In particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

As used herein, the term packet may include a unit of data that may be routed or transmitted between nodes or stations or across a network. As used herein, the term packet may include frames, protocol data units or other units of data. A packet may include a group of bits, which may include one or more address fields, control fields and data, for example. A data block may be any unit of data or information bits.

As used herein, the terms "packet flow" or "flow" may include a set of packets sharing one or several common parameters, such as, for example, an address, a source and/or a destination, a circuit identifier, an identifier, a type of transported protocol, a VLAN, a VID, a pair of addresses (for example a SA and DA), or a combination thereof.

It should be understood that embodiments of the present subject disclosure may be used in a variety of applications. Although the present invention is not limited in this respect, the method for automation system management disclosed herein may be used in many apparatuses such as in any control node of an automation system, such as, without being limited to, an individual controller of a control system of an industrial automation system. However, technical features of the present invention are not limited thereto.

One considers an (industrial) automation system configured with a high-availability feature. The high-availability feature may be implemented by a control system of the automation system, which may comprise one or more controllers (which may indifferently be referred in the present subject disclosure as "controller nodes" or "nodes"). In a typical architecture of a highly available automation system, which may typically be programmed according to the International Electrotechnical Commission standard IEC61499 or the IEC standard IEC61131 Clause 3, controller nodes are paired so as to execute an application on one or more controller nodes of the system.

The architecture of the control system may be distributed to form a so-called "Distributed Control System" (DCS), that is, a computerized control system (for a process or a plant) in which autonomous controllers are distributed throughout the system. The DCS concept increases reliability and reduces installation costs by localizing control functions near the process plant, with remote monitoring and supervision.

In current HA systems, the procedure in case of node failure involves replacing the failed node and restoring the high-availability of the system with the replacement node. However, once the failing node is down, the mean time to repair (MTTR) the high-availability of the system may take several hours, or even several days, for example in remote sites where the plant director needs to send an operator with a spare, provided that a spare hardware can be found easily or has been provisioned in-advance.

This low performance level with respect to MTTR leads to a loss of efficiency and an increased cost of maintenance.

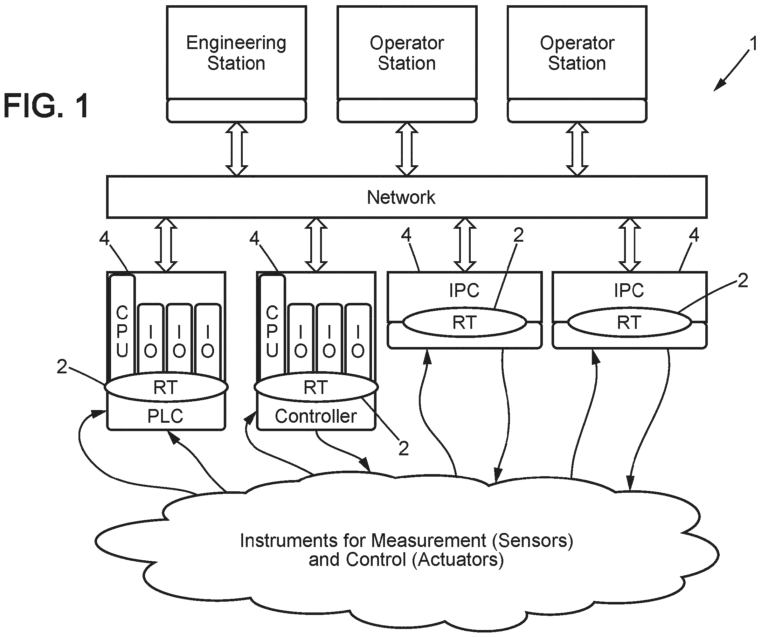

FIG. 1 illustrates an exemplary industrial automation system (1) implementing a suitable control algorithm, such as for example as specified by the IEC 61499 standard. As is known in the art, an IEC-61499 control application is a collection of function blocks that are interconnected forming a function block network.

The exemplary industrial automation system (1) shown on Fig. 1 comprises one or more operator stations, and an engineering station, each of which may be configured to provide operation and maintenance (O&M) functions in the system (1).

The exemplary industrial automation system (1) shown on Fig. 1 comprises controllers (4) implementing runtime software (RT). The runtime (RT) software component (2) hosted in controllers (4) may in some embodiments be designed and implemented as set of software services that host and execute an IEC 61499 control application.

As shown on Fig. 1 in some embodiments the different nodes of the system (1) may be operatively coupled to each other, including for data communication, by a data communication network.

In some embodiments, a controller (4) of the system (1) may comprise one or more control engines (such as, for example, a Central Processor Unit), and one or more Input/Output interface engines configured for interfacing the controller (4) with other nodes of the system (1).

As shown on Fig. 1, in some embodiments one or more of the controllers (4) may be operatively coupled with devices of a sub-system of devices of the system (1), for example comprising one or more of one or more instruments for measurement devices (e.g. sensor devices), and one or more control devices (e.g. actuator devices).

The RT software component (2) can be run on any computing device or a node with a processor and memory (with adequate processing power and memory size). For example, as shown in FIG. 1, in industrial control, it is run in programmable logic controllers (PLCs), controllers used in a distributed control system (DCS) and industrial personal computers (IPCs), referred to generally in FIG. 1 as controller (4). The RT software component 2 leverages the services provided by the host operating system of the device or compute node to perform its duties like communicating with other participating entities in the system, for storing and retrieval of data, etc.

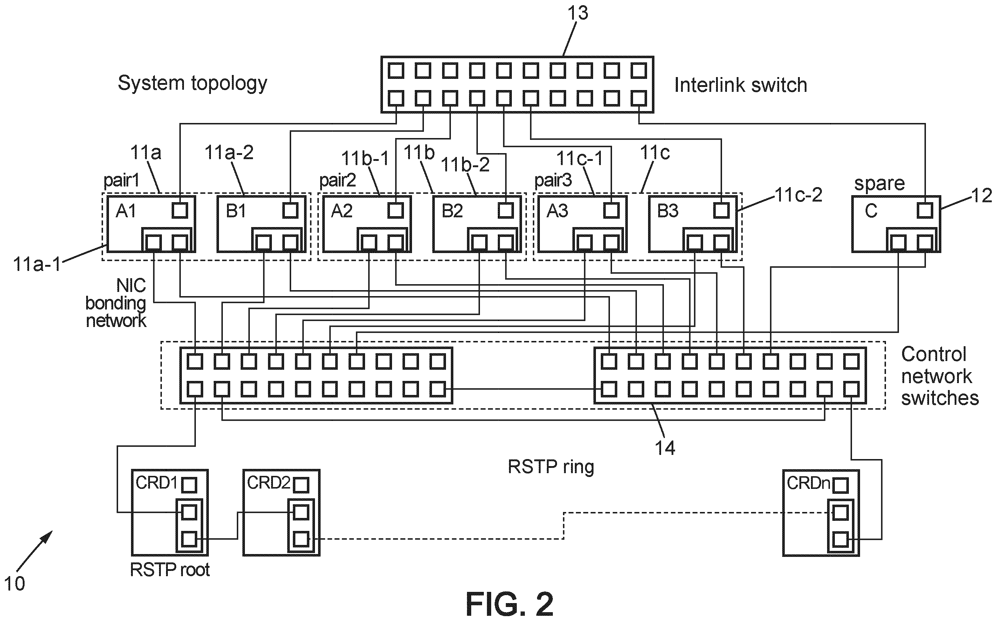

Fig. 2 illustrates an exemplary automation system (10) in which the proposed scheme may be implemented according to one or more embodiments.

The exemplary automation system (10) shown on Fig. 2 comprises a plurality of controllers (11a_1, 11a_2, 11b_1, 11b_2, 11 c_1, 11c_2, and 12) distributed throughout the system and configured as network nodes of a communication network.

The controllers of the automation system (10) are provisioned with communication features for data communication (e.g. among controllers), and may be capable of sending or receiving signals, such as via a wired or wireless network, for example through an inter-link switch as shown on Fig. 2. In some embodiments, the controllers of the automation system (10) may be configured to operate as nodes of a (data communication) control network, such as for example a packet-switched network (e.g. an Ethernet network). For example, in some embodiments, the automation system (10) may comprise an industrial data communication network that uses a customized version of Ethernet or protocols derived therefrom.

In one or more embodiments, one or more controllers (11a_1, 11a_2, 11b_1, 11b_2, 11c_1, 11c_2, and 12) of the automation system (10) may be configured to operate as nodes of a (packet-switched) data communication network (e.g. an Ethernet-based industrial network).

The controller nodes of the control network may be connected to one another in a ring topology using network connections and one or more switches, such as for example the inter-link switch (13) shown on Fig. 2. For example, the controllers may operate as nodes of an Ethernet-based industrial network which may be configured for (packet-switched) data communication through respective Ethernet User-Network Interfaces (UNI) using a standard Ethernet interface, such as a 10 Mbps, 100 Mbps, 1 Gbps, or 10 Gbps Ethernet interface. The Ethernet-based industrial network may be, for example, an Ethernet metropolitan area network (MAN), or an Ethernet wide area network (WAN), and may include any other network nodes (not shown on the figure), such as, for example, switches or bridges.

It will be appreciated by those having ordinary skill in the relevant art that any suitable network topology, such as, for example, a tree topology or a mesh topology, may be used in place of the ring topology shown on Fig. 2 which is given by way of example only. Further, it will be appreciated by those having ordinary skill in the relevant art that any suitable network technology may be used in place of Ethernet which is given by way of example only.

In one or more embodiments, the system (10) may be operated so that it provides respective applications in the context of industrial networks (e.g. automation control, video transfer, software update/upgrade, plant monitoring, etc.).

In some embodiments, each of the controllers of the automation system (10) may be provisioned with control functions, and the plurality of controllers of the automation system (10) may thereby form a distributed control system.

In one or more embodiments, the controllers (11a_1, 11a_2, 11b_1, 11b_2, 11c_1, 11c_2, and 12) of the automation system (10) may be grouped in clusters (11a, 11b, 11c) of two or more synchronized controllers in order to provide high-availability support to the operations of the system (10).

For example, as illustrated by Fig. 2, the controllers (11a_1, 11a_2, 11b_1, 11b_2, 11c_1, 11c_2, and 12) of the automation system may be grouped in pairs of two synchronized controllers: pair 1 of controllers A1, B1, pair 2 of controllers A2, B2, pair 3 of controllers A3, B3.

In one or more embodiments, one or more controllers of the automation system (10) may be configured at runtime level with an advanced synchronization agent configured for synchronizing one or more states (e.g. application states) between the controller and one or more other controllers with which the controller is to be paired for redundancy purposes. In some embodiments, the advanced synchronization agent may be configured in every controller that belong to a cluster of synchronized controllers so that all controllers of a cluster may be synchronized with each other.*

As shown on Fig. 2, one or more of the controllers of the system (10) may be configured with one or more I/O interface engines (e.g. a Network Interface Card (NIC) engine) configured for interfacing the controller (4) with other nodes of the system (1) (including each other as nodes of a control network).

The controllers of the system (10), which may form a distributed control system, may in some embodiments be connected to one another for providing various control functions (such as cluster synchronization), for example in a ring topology ("RSTP ring") using network connections and one or more switches, such as for example the control network switches shown on Fig. 2.

For example, one or more the controllers of the system (10) may in some embodiments be configured with data communication engines in order to operate as a node of a data communication network of the distributed control system. As shown in Fig. 2, in some embodiments the data communication network (including nodes) of the distributed control system may for example be configured as an Ethernet-based network. In particular, as shown in Fig. 2, in some embodiments the Ethernet-based data communication network (including nodes) of the distributed control system may for example be configured to use the Rapid Spanning Tree protocol (RSTP) for ensuring a loop-free topology of the network and thereby improves high-availability features provided in the distributed control system. One or more Custom Resource Definitions (CRD) nodes may also be present in the distributed control network, to be used for example for configuration and distribution of network policies to nodes of the network.

For example, the controllers may operate as nodes of an Ethernet-based industrial network which may be configured for (packet-switched) data communication through respective Ethernet User-Network Interfaces (UNI) using a standard Ethernet interface, such as a 10 Mbps, 100 Mbps, 1 Gbps, or 10 Gbps Ethernet interface. The Ethernet-based industrial network may be, for example, an Ethernet metropolitan area network (MAN), or an Ethernet wide area network (WAN), and may include any other network nodes (not shown on the figure), such as, for example, switches or bridges.

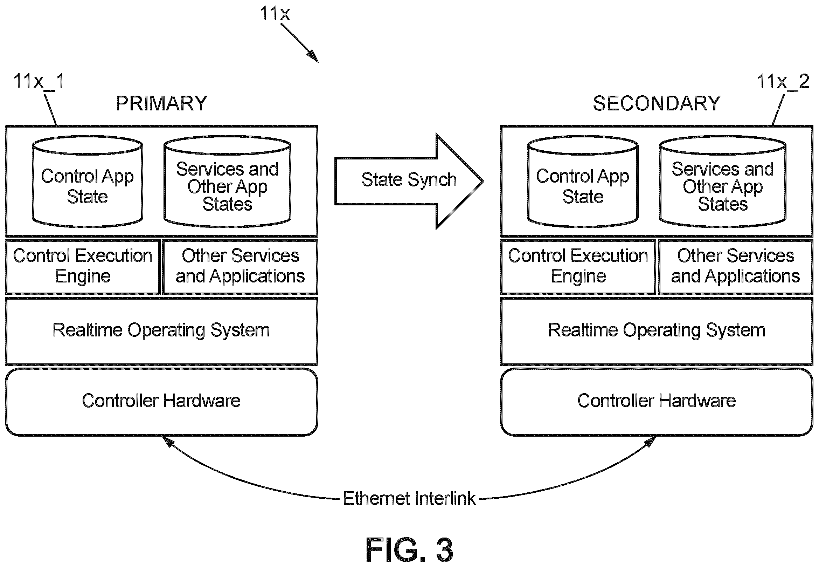

Fig. 3 illustrates a pair (11x) of synchronized controllers in accordance with one or more embodiments.

Industry commonly requests that vendors of industrial control systems provide highly available, fault-tolerant control systems that ensure continuous operation even in the event of faults or failures. To achieve this, such vendors often implement active and backup mechanisms in their controllers. A highly available (HA) controller is typically designed in a multiplex (e.g. duplex) configuration, having individual controllers (11x_1, 11x_2) grouped in clusters (which may be referred to herein as "synchronized clusters"), each cluster comprising two or more individual controllers, among which a controller is operating in an active/primary mode and one or more controllers are operating in a backup mode.

Fig. 3 shows two paired controllers (11x_1 and 11x_2) which may correspond to any of the pairs of controllers (pair1 of controllers (A1, B1), pair2 of controllers (A2, B2), and pair3 of controllers (A3, B3)) of the exemplary industrial automation system topology shown on Fig. 2. A primary controller (11x_1) of the pair actively executes one or more tasks (such as, for example, monitoring and controlling the plant/process), while one or more secondary, or backup, controller(s) (11x_2) of the synchronized cluster are configured to wait to take over in case of a failure of the primary controller (11x_1).

In the example illustrated by Fig. 3, each of the primary controller (11x_1) and secondary controller (11x_2) comprises a Control Execution Engine, an Engine for executing Other Services and Applications, an Operating System (e.g. a Realtime Operating System), and a Controller Hardware. The Controller Hardware may comprise a data communication interface for data communication with another controller, for example through an Ethernet Interlink as described in connection with Fig. 2.

At runtime level, each of the two paired controllers (primary controller (11x_1) and secondary controller (11x_2) on Fig. 3) may be configured with an advanced synchronization agent which is configured to synchronize one or more states (such as for example a state of a Control Application and one or more states related to other services and applications) between the two paired controllers.

For example, synchronization of the control application state from the primary controller (11x_1) to a secondary controller (11x_2) is typically provided in highly-available controllers to ensure seamless transition and avoid undesired changes in plant/process control. This synchronization may involve full or partial state synchronization and may occur at specific intervals (e.g. regular intervals, such as every week) depending on the design and implementation. Additionally, in many designs such as Hot Standby redundancy, the complete state of each synchronized controller (11x_1), (11x_2), including the control application state, services state, and underlying platform state, may be synchronized.

An (e.g. high-speed gigabit) Ethernet interlink, for example, may be used for ultra quick and efficient synchronization of state from the primary controller to the secondary controller(s). Preferably, complete bandwidth of the interlink permits achieving the expected performance. In one or more embodiments, the interlink is a dedicated and direct interlink between the controllers (11x_1), (11x_2) of a synchronized cluster and an interlink protocol used for event synchronization and other data synchronizations without a switched network.

Referring back to Fig. 2, in one or more embodiments, one or more of the individual controllers (11a_1, 11a_2, 11b_1, 11b_2, 11c_1, 11c_2) of the industrial automation system (10) may be configured with a so-called "automatic/hot marry" engine so as to be capable of automatically performing a cluster joining procedure (in some embodiments in which clusters are limited to a pair of individual controllers, the cluster joining procedure may be referred to as a "pairing procedure"), for example upon detecting that the individual controller is not (e.g. no longer) paired with another individual controller so as to provide high-availability for the industrial automation system (10). In some embodiments, the cluster joining procedure may be performed by an individual controller upon one or more of startup of the individual controller (for example after a failure), recovery from a failure, detection of failure of the last (or in some embodiments the single) controller with which the individual controller was synchronized, for determining a controller available for synchronization with the individual controller.

In one or more embodiments, the cluster joining procedure may comprise determining a candidate controller that is available to pair with (through synchronization).

In some embodiments, once a candidate controller has been determined, the individual controller may send a message to the candidate controller to request pairing with the candidate controller (through synchronization).

In some embodiments, upon receipt from the candidate controller of an (in some embodiments implicit) acknowledgment, the individual controller and the candidate controller may engage into a synchronization procedure to be synchronized with each other.

In one or more embodiments, the automatic/hot marry engine of an individual controller may be configured for engaging into a cluster joining procedure upon detection that the individual controller is not synchronized with at least one other controller.

In one or more embodiments, one or more of the individual controllers (11a_1, 11a_2, 11b_1, 11b_2, 11c_1, 11c_2) of the industrial automation system (10) may be configured with configuration data (related to redundancy information) which comprises identification information (e.g. an identifier) of one or more controllers of the one or more of the individual controllers that are available to pair with (through synchronization).

In one or more embodiments, one or more of the individual controllers (11a_1, 11a_2, 11b_1, 11b_2, 11c_1, 11c_2) of the industrial automation system (10) may be configured with configuration data (related to redundancy information) which comprises identification information (e.g. an identifier) of another controller of the one or more of the individual controllers to be used as backup controller. For example, in embodiments using a topology in which individual controllers are to be paired with another controller to form pairs of controllers comprising an active controller and a backup controller (as illustrated by Figure 3 or by the pairs of controllers (A1, B1), (A2, B2), and (A3,B3) of Figure 2), each individual controller may be configured with data related to redundancy information which comprises identification information (e.g. an identifier) of the other controller among the other individual controllers to be used as backup controller.

In one or more embodiments, one or more of the individual controllers (11a_1, 11a_2, 11b_1, 11b_2, 11c_1, 11c_2) of the industrial automation system (10) may be configured with configuration data that identifies two or more controllers that may be used as backup controller. In such embodiments, the individual controller may further be configured to elect, among the two or more controllers that may be used as backup controllers, a preferred controller to pair with in order to operate as a redundant pair.

Advantageously, as in such embodiments an individual controller may be configured with a plurality of controllers that may be used as backup controller, the individual controller may select a first controller in the plurality of controllers to be used as backup controller, and keep a second controller of the plurality of controllers as spare controller in case of failure of the first controller (e.g. once paired with the first controller). In the exemplary system illustrated by Fig. 2, each of the controllers Ai (respectively Bi) (i=1, 2, 3) may have been configured to preferably used the controller Bi (respectively Ai) to form a redundant pair, and to use the spare node C in case of failure of its paired controller. Thanks to the use of an additional spare node C which is available in case of non-availability of one or more controllers to be used as backup to form a redundant pair of controller, a self-repairing capability of one or more pairs of controllers is advantageously provided in an highly-available control system of an industrial automation system. In one or more embodiments, the configuration data may further comprise identification information (e.g. an identifier) of a controller (12) of the one or more of the individual controllers which is made available to be used as spare controller. Using the pairs of controllers shown on Fig. 2 as an example, the individual controllers with respective identifiers A1, B1, A2, B2, A3, B3 may respectively be configured with the following configuration data (in which the controller on the lefthand-side is the controller provided with the configuration data, which is shown on the right hand-side of the arrow:

     A1 -> [B1;C]
     B1 -> [A1;C]
     A2 -> [B2;C]
     B2 -> [A2;C]
     A3 -> [B3;C]
     B3 -> [A3;C]

In the above example, controller A1 is provided with configuration data that indicates that controllers B1 and C are available to form with controller A1 respective pairs of synchronized controllers supporting high-availability (in some embodiments through synchronizing with controller A1), and that controller C is available as spare controller in cases where controller B1 is not available

In some embodiments, controller A1 is provided with configuration data that further indicates that controller B1 is available to form a pair of synchronized controllers supporting high-availability (in some embodiments through synchronizing with controller B1), and that controller C is available as spare controller in cases where controller B1 is not available.

In one or more embodiments, the configuration data received by one or more of the individual controllers (11a_1, 11a_2, 11b_1, 11b_2, 11c_1, 11c_2) of the industrial automation system (10) may comprise an ordered list of controller identifiers in which configuration information is carried by the order in which each listed controller is listed. For example, in some embodiments, the controller placed in a first position in the configuration list may be provisioned to the controller as being the controller with which the controller should preferably pair. For example, the controller placed in last position in the configuration list may be provisioned as the controller to be used as spare.

In the above example, controller A1 may be provided with configuration data that indicates that it should preferably pair with controller B1 (in some embodiments synchronize with controller B1) to form a pair of synchronized controllers supporting high-availability, and that it should use controller C as spare controller in cases where controller B1 is not available.

In one or more embodiments, the industrial automation system (10) may comprise a spare node C (12) which is provided as a spare node available in case of failure of a controller of a synchronized cluster (such as, for example, an individual controller among controllers (11a_1, 11a_2, 11b_1, 11b_2, 11c_1, 11c_2) of Fig. 2.

In one or more embodiments, the spare node may be configured as a node of the (data communication) control network so as to be communicatively coupled with other nodes of the control network, such as the individual controllers (11a_1, 11a_2, 11b_1, 11b_2, 11c_1, 11c_2), for example through the inter-link switch (13) shown on Fig. 2.

In one or more embodiments, the spare node may be configured with hardware and software that is suitable to replace any controller upon failure of such controller. For example, in some embodiments, the spare node may be provisioned with capabilities which are at least the same as any of the controllers the spare node may be used to replace. Depending on the embodiments, the capabilities may include one or more of processing capabilities (e.g. computational power), networking capabilities, real-time capabilities, and near real-time capabilities, and may be implemented using hardware, software, firmware, middleware, microcode, or any suitable combination thereof. As another example, in some embodiments, the spare node may be configured according to a compatibility requirement, and may be provisioned with software (including software versions), network interfaces and any other aspect for which compatibility may be required which are compatible with that of any of the controllers the spare node may be used to replace.

In one or more embodiments, the spare node may be configured with a so-called "automatic/hot marry" engine so as to be capable of engaging into a cluster joining procedure, for example upon receiving a request from a controller.

In one or more embodiments, the spare node may be configured to run into a semi-operational mode during operation of the industrial automation system. In some embodiments, the semi-operational mode may be an operation mode in which the spare node executes a software task for monitoring receipt of a request for pairing with an individual controller (through synchronization).

In one or more embodiments, one or more of the spare nodes of the industrial automation system (10) may be configured with configuration data (related to redundancy information) which comprises identification information (e.g. an identifier) of one or more of the individual controllers for which the configured spare node is to be available to be used as backup controller. For example, in embodiments using a topology in which one or more of the individual controllers is configured with data related to redundancy information which comprises identification information (e.g. an identifier) of the spare node (C), the spare node may be configured with data related to redundancy information which comprises identification information (e.g. an identifier) of the individual controllers which may request to use the spare node as backup controller. Using the individual controllers (with respective identifiers A1, B1, A2, B2, A3, B3) and the spare node shown on Fig. 2 as an example, the spare node (C) may be configured with the following configuration data (in which the controller on the lefthand-side is the controller provided with the configuration data, which is shown on the right hand-side of the arrow:
C -> [A1; B1; A2; B2; A3; B3]

In one or more embodiments, the industrial automation system (10) may comprise a configuration server communicably coupled to each of the controllers of the system (10) and configured for providing controllers with respective configuration data.

In some embodiments, the configuration server may be configured to provide each of the controllers of the system (10) - in some embodiments with the exception of a controller made available as spare controller of the system (10) - with respective configuration data, for example through the transmission to the current controller of a configuration message that carries the configuration data. For a given controller (the "current controller") the configuration data may comprise identification data for the recipient controller (the current controller), identification data for one or more other controllers that are available for creating a cluster of synchronized controllers wherein the current controller operates as the primary controller and the other controller(s) as secondary controllers, and identification data for a controller that is available as spare controller.

In one or more embodiments, one or more (in some embodiments each) of the controllers of the system (10) may be preconfigured with respective configuration data which, depending on the embodiment, may be based on pre-loaded common configuration data or individual configuration data as described herein.

In one or more embodiments, one or more (in some embodiments each) of the controllers of the system (10) may be configured to send to a server of the system (10) (e.g. to the configuration server) a request for configuration data in order to obtain respective individual configuration data comprising identification data for a spare controller usable as spare by the controller according to embodiments of the present subject disclosure. In some embodiments, the request for configuration data may comprise a request for identifying a spare controller. In some embodiments, the request for configuration data may comprise data describing one or more characteristics of the requested spare controller. In some embodiments, the request for configuration data may be implicit through the data describing one or more characteristics of the requested spare controller comprised therein.

Referring to the above example of configuration data, in one or more embodiments, for the controller index $i \in [\![1, n]\!]$ (n being equal to 3 in the exemplary system illustrated on Fig. 2), one or more of the controller Ai may be configured with individual configuration data comprising identification data of controller Ai, identification data for controller Bi, and identification data for the spare controller C (Ai -> [Bi;C]), and the controller Bi may be configured with individual configuration data comprising identification data of controller Bi, identification data for controller Ai, and identification data for the spare controller C (Bi -> [Ai;C]).

In some embodiments, one or more of the controller Ai may be pre-configured with its respective individual configuration data, and the controller Bi may be preconfigured with its respective individual configuration data.

In some embodiments, one or more of the controllers Ai and Bi may be configured to send to the configuration server a request for configuration data in order to obtain respective individual configuration data comprising identification data for a spare controller. In some embodiments, the request for configuration data may comprise a request for identifying a spare controller. In some embodiments, the request for configuration data may comprise a request for identifying a spare controller with data describing one or more characteristics of the requested spare controller. In some embodiments, the request for configuration data may be implicit through the data describing one or more characteristics of the requested spare controller comprised therein

Depending on the embodiment, identification of a controller node may be based on any suitable network node identification, such as for example a network address or a unique ID (e.g. which may be resolvable as a network address by a sub system (e.g. using a network address resolution scheme)).

In some embodiments, the configuration server may be configured to provide one or more (in some embodiments each) of the controllers of the system (10) - in some embodiments with the exception of a controller made available as spare controller of the system (10) - with common configuration data, for example through the transmission to the intended recipient controllers of a configuration message that carries the common configuration data.

In some embodiments, the configuration server may be configured to provide one or more (in some embodiments each) of the controllers of the system (10) - including one or more spare controllers of the system (10) - with common configuration data, for example through the transmission to the intended recipient controllers (or through a broadcast to all controllers) of a configuration message that carries the common configuration data.

In some embodiments, common configuration data may be provided to one or more controllers of the system that may operate as one or more of a primary controller, a secondary controller, and a spare controller, for example through deploying (e.g. broadcasting) a configuration message to all controllers of the system. In some embodiments, common configuration data may be provided to each controller of the system, for example through deploying (e.g. broadcasting) a configuration message to all controllers of the system.

The common configuration data may comprise respective individual configuration data that is usable by (each of) the controllers to which the common configuration data is provided. For example, in some embodiments, the common configuration data may comprise a set of individual configuration data, each individual configuration data comprising identification data for an individual controller, identification data for one or more controllers other than the individual controller that are available for creating a cluster of synchronized controllers wherein the individual controller operates as the primary controller and the other controller(s) as secondary controllers, and identification data for a controller that is available to the individual controller as spare controller.

Referring to the above example of configuration data, for the controller index $i \in [\![1, n]\!]$ (n being equal to 3 in the exemplary system illustrated on Fig. 2), all of the controller Ai and Bi may be configured with common configuration data comprising individual configuration data for each of the controllers Ai and Bi (for example a set of individual configuration data comprising, for a controller Ai/Bi, identification data of the controller Ai/Bi, identification data for the controller Bi/Ai, and identification data for the spare controller C (Ai -> [Bi;C] and Bi -> [Ai;C] for $i \in [\![1, n]\!]$ ).

Using common configuration data in one or more embodiments advantageously avoids setting individualized configuration data for each individual controller (including spare controllers) to be configured for implementing the proposed scheme. In such embodiments, the configuration server may advantageously generate the same configuration data set for all the controllers of the industrial automation system.

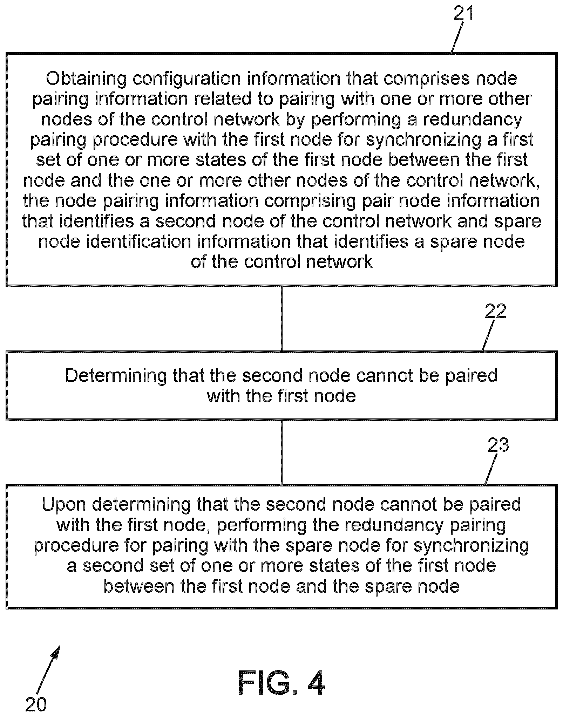

Figure 4 is a block diagram illustrating an exemplary method (20) for managing a first node of a control network of an industrial automation system according to one or more embodiments.

One considers a controller which is a node (referred to as "first node") of a control network of an industrial automation system, such as, for example, an autonomous controller of a distributed control system of an industrial automation system.

In one or more embodiments, the first node may be provisioned at system level with a control engine configured for performing control functions as control features supported by the control network. In some embodiments, the control engine may be implemented as a programmable logic controller (plc) configured with a plc software (also referred to as "runtime") which may be configured (including in some embodiments security configuration) to perform various aspects of embodiments of the methods proposed in the present subject disclosure. In one or more embodiments, the control engine may operate according to a plurality of running states which comprise a "started" state which corresponds to an initial operation mode of the first node upon being started. In some embodiments, the control engine may be executed. For example, the plc runtime configured on the first node may be started (e.g. may be running in a "started" state).

In one or more embodiments, the first node may further be provisioned at runtime level with a synchronization engine configured for synchronizing software states between the first node and a second node of the control system that forms a pair of synchronized controllers. In some embodiments, the synchronization engine may be configured for synchronizing software states between the first node and a plurality of other nodes of the control system that form a cluster of synchronized controllers. In embodiments where a control engine of the first node operates according to a plurality of running states, the states may include a "paired" or "synchronized" state, which corresponds to an operation mode in which the first node is synchronized with another node of the control system, and a "single" state, which corresponds to an operation mode in which the first node is not synchronized with another node of the control system.

In one or more embodiments, the first node may obtain (21) configuration information that comprises node pairing information related to pairing with one or more other nodes of the control network. In some embodiments, the node pairing information may comprise pair node information that identifies a second node of the control network, and may further comprise spare node identification information that identifies a spare node. The spare node may advantageously provide self-repairing capabilities for the control system (control network) of the industrial automation system as it is made available for replacing the second node for redundancy pairing with the first node in cases where the second node is not available or becomes non available for pairing with the first node (e.g. in case of failure of the second node, for example once paired with the first node).

In one or more embodiments, the first node may determine (22) that the second node cannot be paired with the first node. As described above, in some embodiments, the second node would be paired with the first node further to performing a redundancy pairing procedure for pairing with the first node for synchronizing a first set of one or more states of the first node between the first node and the second node.

In one or more embodiments, the first node may determine that the second node cannot perform a redundancy pairing procedure for pairing with the first node. As described above, in some embodiments, the redundancy pairing procedure may be used to perform synchronizing of a first set of one or more states of the first node between the first node and the node to which it is being paired.

In one or more embodiments, the first node may determine that the second node no longer can be paired with the first node. In such embodiments, the first node may have performed the redundancy pairing procedure with the second node for synchronizing one or more states between the first node and the second node, and may have determined, once the first node and the second node form a synchronized pair of nodes (through completion of the redundancy pairing procedure between the first node and the second node) that the second node is no longer paired with the first node (for example by detecting a failure of the second node).

In some embodiments, the first node may determine that the second node cannot be paired with the first node upon detecting a failure of the second node. Depending on the embodiment, the detecting a failure of the second node may be performed by the first node through one or more of detecting a failure in maintaining the first node synchronized with the second node, receiving a message informing the first node of a failure of the second node, and detecting by the first node a failure of the second node further to monitoring the operating state of the second node.

In one or more embodiments, the determining that the second node cannot be paired with the first node may comprise determining that the second node cannot perform the redundancy pairing procedure with the first node. Depending on the embodiment, the determining that the second node cannot perform the redundancy pairing procedure with the first node may comprise determining one or more of the second node not being capable of performing the pairing procedure (for example in a case where the first node engages in performing a redundancy pairing procedure with the second node and determines that the second node lacks capabilities for successfully completing the redundancy pairing procedure), and the second node is not available for performing the redundancy pairing procedure (for example in a case where the second node has not yet recovered from a failure, has not yet reached at startup an operational state in which in can be paired with the first node).

In one or more embodiments, upon determining that the second node cannot be paired with the first node, the first node may engage into performing (23) the redundancy pairing procedure for pairing with the spare node. The redundancy pairing procedure may therefore be used to perform synchronizing of a second set of one or more states of the first node between the first node and the spare node. Depending on the case at hand, the first set of one or more states of the first node that would have been synchronized with that of the second node

In one or more embodiments, the node pairing information may comprise a prioritized list of one or more (allowed) pair nodes according to which the first node is to engage into pairing with a node in the list according to a position of the node in the list. For example, upon receiving the list of one or more pair nodes, the first node may select the node having the first position in the list and engage into performing a redundancy pairing procedure for pairing with such node. Further, upon determining, as the case may be, that the node having the first position in the list is not available for pairing (e.g. in a case where such node experiences a failure), the first node may select the next node in the list and engage into performing a redundancy pairing procedure for pairing with such node.

In one or more embodiments, the node pairing information may comprise a list of one or more (allowed) pair nodes according to which the first node is to engage into pairing with a node in the list, and the spare node may be signaled through a predefined position in the list (e.g. by having the last position in the list).

In one or more embodiments, the node pairing information may be comprised in the configuration information that is common to a plurality of nodes of the control network.

Depending on the embodiment, the configuration information may be received by the first node (e.g. through a configuration message carrying customized or common configuration information which comprises the node pairing information, depending on the embodiment), may be obtained by the first node (for example by querying a configuration server), or may be preconfigured for the first node.

In one or more embodiments, performing the pairing procedure with a pair candidate node (e.g. the second node or the spare node) may comprise: sending, to the pair candidate node, a request for pairing, receiving, from the pair candidate node, a pairing confirm message, and performing state synchronization between the first node and the pair candidate node to synchronize a set of one or more states of the first node between the first node and the pair candidate node.

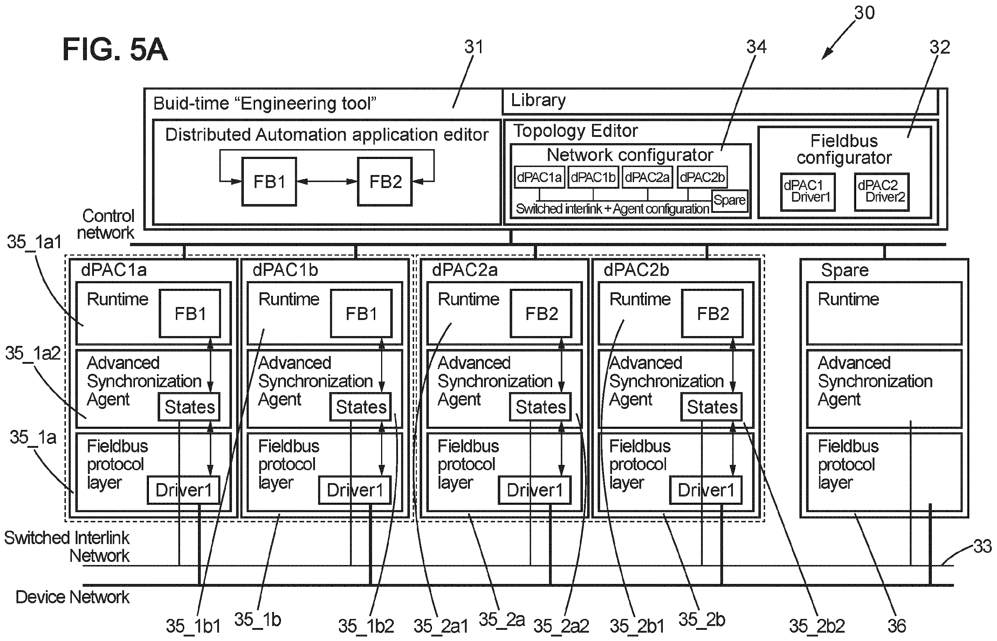

Fig. 5a is a block diagram that illustrates an exemplary industrial automation system according to one or more embodiments of the present subject disclosure.

Shown on Fig. 5a is a control system (30) of an industrial automation system which comprises a build-time Engineering tool (31) that may be configured for one or more of creating, mapping, compiling and deploying, depending on the embodiment, a monolithic or distributed automation application to several Programmable Automation Controllers (PACs) (which may be referred to as a "dPAC" on Fig. 5A).

In some embodiments, the Engineering tool (31) may be configured to enable one or more of the configuration, mapping and deployment of a hardware configuration for an IO system and servo drives relying on one or several fieldbus protocols. In some embodiments, one or more of the configuration, mapping and deployment of a hardware configuration for an IO system and servo drives may be performed through a Fieldbus configurator (32), as shown on Fig. 5a. In this regard, a fieldbus protocol layer may be configured in each of the controllers (35_1a, 35_1b, 35_2a, 35_2b) (including the spare controller) for data communication as nodes of a data communication network ("Device Network" shown on Fig. 5A).

In some embodiments, the Fieldbus configurator (32) may be configured to provide the capacity for an end-user to select which fieldbus shall be managed by which PAC.

In some embodiments, the Engineering tool (31) may be configured to provide the configuration tool to enable configuration of a switched Interlink Network (33) between the different pairs of PACs (35_1a, 35_1b) (35_2a, 35_2b) and the spare nodes (36). In some embodiments, the configuration of the switched Interlink Network (33) may be performed through a Network configurator (34), as shown on Fig. 5a. As shown on the Figure, in some embodiments the Network configurator (34) and the Fieldbus configurator (32) may be implemented as components (engines) of a Topology Editor of the Engineering tool (31).

In some embodiments, one or more (in some embodiments each) of the PACs (35_1a, 35_1b, 35_2a, 35_2b) used inside the distributed automation application may include one or more of a runtime (35_1a1, 35_1b1, 35_2a1, 35_2b1) configured to execute the distributed automation application, and an advanced (self-repairing) synchronization agent (35_1a2, 35_1b2, 35_2a2, 35_2b2) configured to select a node to pair with on the switched interlink network (33) on one or more (in some embodiments every) related events (such as, for example, startup, failure, user-triggered).

In some embodiments, one or more (in some embodiments each) of the PACs (35_1a, 35_1b, 35_2a, 35_2b) may also include real-time (near-real-time in some embodiments) capabilities (which, depending on the embodiment, comprise one or more of hardware real-time (near-real-time in some embodiments) capabilities and software real-time (near-real-time in some embodiments)capabilities).

In one or more embodiments, the respective advanced synchronization agent (35_1a2, 35_1b2, 35_2a2, 35_2b2) of one or more (in some embodiments each) of the PACs (35_1a, 35_1b, 35_2a, 35_2b) may contain an ordered list of nodes to which the corresponding PAC can pair with.

In some embodiments, the respective advanced synchronization agent (35_1a2, 35_1b2, 35_2a2, 35_2b2) may interact with the corresponding runtime (35_1a1, 35_1b1, 35_2a1, 35_2b1) executing the automation application in order to decide that the selection process of the pair nodes is to be triggered.

In some embodiments, the runtime (35_1a1, 35_1b1, 35_2a1, 35_2b1) may be configured to determine whether an election process is to be restarted.

In some embodiments, the runtime (35_1a1, 35_1b1, 35_2a1, 35_2b1) may further be configured to implement the interface to the build-time engineering tool deploying the application and the configuration.

In some embodiments, once configured and initialized by the runtime (35_1a1, 35_1b1, 35_2a1, 35_2b1), the advanced synchronization agent (35_1a2, 35_1b2, 35_2a2, 35_2b2) may be available to perform one or more of synchronizing one or more states with an elected node (e.g. through a switched interlink network) and managing the status of a switched interlink network connecting the dPACs and spare controllers with each other for control functions (e.g. state synchronization and self-repairing).

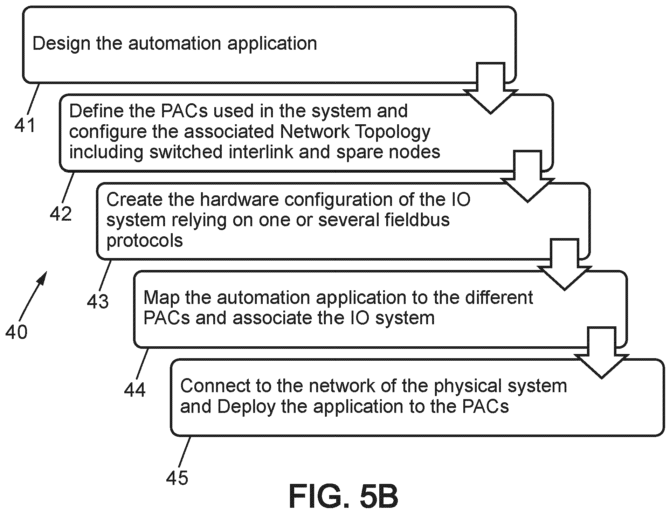

Figure 5b is a flow diagram that illustrates an exemplary design, configuration and deployment workflow (40) according to one or more embodiments.

As shown on Fig. 5b, in one or more embodiments, once the automation application is designed (41), the PACs used in the industrial automation system may be defined, and the associated network topology (including switched interlink and one or more spare nodes) may be configured (42).

In one or more embodiments, the hardware configuration of the IO (input/output) system of the control system of the industrial automation system may be configured (43), for example to use one or several fieldbus protocols. In some embodiments, the IO system may be configured with a set of input and output modules/interfaces which enable to connect the controller to its external environment to read sensors and write actuators.

In one or more embodiments, the automation application may be mapped (44) to the different PACs and associated with the IO system. For example, in some embodiments, the automation application may be configured with a set of logical variables representing interactions to processes (e.g. "Pump.start", "tank.level", etc.) and with an association (or mapping) of these variables to the physical IO system (e.g. the "Pump.start" process may be mapped to "Module2.output3" in the IO system).

Further, in some embodiments, the application may be deployed (45) to the PACs once connected to the network of the physical system.

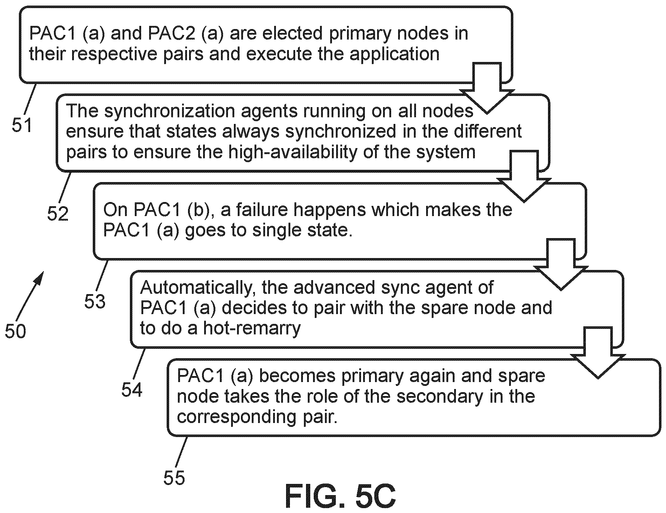

Figure 5c is a flow diagram that illustrates an exemplary operational workflow (50) during runtime according to one or more embodiments.

Referring to Figs. 5a and 5c, in one or more embodiments, the controllers PAC1(a) (35_1a) and PAC2(a) (35_2a) may be elected (51) primary nodes in their respective pairs, and may execute the application.

In one or more embodiments, the respective advanced synchronization agents (35_1a2, 35_1b2, 35_2a2, 35_2b2) running on one or more (in some embodiments all) of the nodes (35_1a, 35_1b, 35_2a, 35_2b) may be configured to ensure (52) that one or more states are (depending on the embodiment, substantially always or periodically) synchronized in the different pairs to ensure the high-availability of the corresponding controller nodes.

In some embodiments, in case a failure occurs on PAC1(b) (35_1b), the corresponding paired node PAC1(a) (35_1a) may switch (53) from a "paired" state of operation to a "single" state of operation.

In one or more embodiments, based on the node PAC1(a) (35_1a) entering the "single" state, the advanced synchronization agent (35_1a2) of the node PAC1 (a) (35_1a) may (automatically) determine (54) to pair with the spare node (36) and to perform a "hot-remarry" procedure.

As a consequence, the node PAC1(a) (35_1a) may become (55) once again a primary node of a pair (35_1a, 36) of synchronized nodes, and the spare node (36) may become the secondary node of the primary node PAC1(a) (35_1a) in the corresponding pair (35_1a, 36).

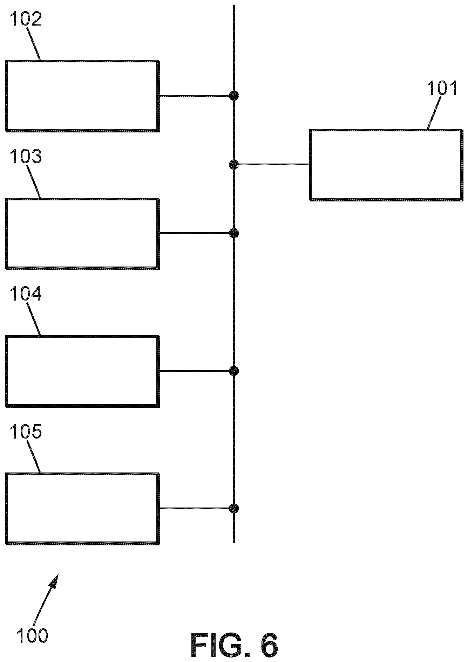

Figure 6 illustrates an exemplary controller apparatus 100 of a control network configured to use features in accordance with embodiments of the present subject disclosure.

The controller apparatus 100 may include a control engine 101, runtime engine 102, network engine 103, advanced synchronization engine 104, a memory 105, and a power supply (e.g., a battery, plug-in power supply, etc.) (not represented on the figure).

In the architecture illustrated on Fig. 6, all of the runtime engine 102, network engine 103, advanced synchronization engine 104, and memory 105 are operatively coupled with one another through the control engine 101.

In one or more embodiments, the runtime engine 102 is configured to perform various aspects of embodiments of the proposed methods for executing an application as described herein. For example, in some embodiments, the network engine 103 may be configured to obtain configuration information that comprises node pairing information related to pairing with one or more other nodes of the control network by performing a redundancy pairing procedure with the first node for synchronizing a first set of one or more states of the first node between the first node and the one or more other nodes of the control network, the node pairing information comprising pair node information that identifies a second node of the control network and spare node identification information that identifies a spare node of the control network.

In one or more embodiments, the network engine 103 is configured to manage one or more data communication interfaces to provide data communication network connectivity to the advanced synchronization engine 104 with the respective advanced synchronization engines of other controllers and of the spare controller (spare node) of the control system (for example through a switched interlink network to which all of the respective advanced synchronization engines are connected), and to a device network of the industrial automation system.

In one or more embodiments, the advanced synchronization engine 104 is configured to perform various aspects of embodiments of the proposed methods for performing advanced synchronization of nodes as described herein. For example, in some embodiments, the advanced synchronization engine 104 may be configured to perform one or more of determining that the second node cannot be paired with the first node, and upon determining that the second node cannot be paired with the first node, performing the redundancy pairing procedure for pairing with the spare node for synchronizing a second set of one or more states of the first node between the first node and the spare node.

The control engine 101 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 101 may also comprise, or may be in communication with, computer storage media, such as, without limitation, the memory 105, capable of storing computer program instructions or software code that, when executed by the processor, causes the processor to perform the elements described herein. In addition, the memory 105 may be any type of data storage computer storage medium, capable of storing a data structure representing a computer network to which the controller apparatus 100 belongs, coupled to the control engine 101 and operable with the runtime engine 102, the network engine 103 and the advanced synchronization engine 104 to facilitate management and processing of data stored in association therewith.

In embodiments of the present subject disclosure, the controller apparatus 100 is configured for performing the methods described herein.

It will be appreciated that the controller apparatus 100 shown and described with reference to Fig. 6 is provided by way of example only. Numerous other architectures, operating environments, and configurations are possible. Other embodiments of the node may include fewer or greater number of components, and may incorporate some or all of the functionality described with respect to the controller apparatus components shown in Fig. 6. Accordingly, although the control engine 101, runtime engine 102, network engine 103, the advanced synchronization engine 104, and memory 105 are illustrated as part of the controller apparatus 100, no restrictions are placed on the location and control of components 102 - 105. In particular, in other embodiments, components 102 - 105 may be part of different entities or computing systems.

Depending on the embodiment, the apparatus 100 may be implemented in software, as described above, or in hardware, such as an application specific integrated circuit (ASIC), or in the form of a combination of hardware and software, such as for example a software program intended to be loaded and executed on a component of FPGA (Field Programmable Gate Array) type.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1. A method for managing a first node of a control network of an industrial automation system, the method being implemented by the first node and comprising:

   Obtaining configuration information that comprises node pairing information related to pairing with one or more other nodes of the control network by performing a redundancy pairing procedure with the first node for synchronizing a first set of one or more states of the first node between the first node and the one or more other nodes of the control network, wherein the node pairing information comprises pair node information that identifies a second node of the control network, and spare node identification information that identifies a spare node of the control network;
   Determining that the second node cannot be paired with the first node; and
   Upon determining that the second node cannot be paired with the first node, performing the redundancy pairing procedure for pairing with the spare node for synchronizing a second set of one or more states of the first node between the first node and the spare node.

2. A method according to claim 1, further comprising:
   Performing the redundancy pairing procedure with the second node for synchronizing one or more states between the first node and the second node, wherein the determining that the second node cannot be paired with the first node comprises determining, once the first node is paired with the second node through completion of the redundancy pairing procedure between the first node and the second node, that the second node is no longer paired with the first node.

3. A method according to any of the preceding claims, wherein determining that the second node cannot be paired with the first node comprises detecting a failure of the second node.

4. A method according to any of the preceding claims, wherein determining that the second node cannot be paired with the first node comprises determining that the second node cannot perform the redundancy pairing procedure with the first node.

5. A method according to claim 4, wherein determining that the second node cannot perform the redundancy pairing procedure with the first node comprises detecting one or more of the second node is not capable of performing the pairing procedure, and the second node is not available for performing the redundancy pairing procedure.

6. A method according to any of the preceding claims, wherein the node pairing information comprises a prioritized list of one or more pair nodes according to which the first node is to engage into pairing with a node in the list according to a position of the node in the list.

7. A method according to any of the preceding claims, wherein the node pairing information comprises a list of one or more pair nodes according to which the first node is to engage into pairing with a node in the list, and the spare node is signaled through a predefined position in the list.

8. A method according to any of the preceding claims, wherein the node pairing information is comprised in the configuration information that is common to a plurality of nodes of the control network.

9. A method according to any of the preceding claims, wherein the configuration information is received by the first node.

10. A method according to any of the preceding claims, wherein performing the pairing procedure with a pair candidate node comprises: sending, to the pair candidate node, a request for pairing, receiving, from the pair candidate node, a pairing confirm message, and performing state synchronization between the first node and the pair candidate node to synchronize a set of one or more states of the first node between the first node and the pair candidate node.

11. An apparatus, the apparatus comprising a processor, a memory operatively coupled to the processor, and network interfaces to communicate in a computer network, wherein the apparatus is configured to perform a method according to any of claims 1 to 10.

12. A non-transitory computer-readable medium encoded with executable instructions which, when executed, causes an apparatus comprising a processor operatively coupled with a memory, to perform a method according to any of claims 1 to 10.

13. A computer program product comprising computer program code embodied in a computer readable medium, said computer program code comprising instructions to, when provided to a computer system and executed, cause said computer to perform a method according to any of claims 1 to 10.

14. A data set representing, for example through compression or encoding, a computer program according to claim 13.

**FIG. 1**

EP 4 760 426 A1

FIG. 2

**FIG. 3**

21

Obtaining configuration information that comprises node
pairing information related to pairing with one or more other
nodes of the control network by performing a redundancy
pairing procedure with the first node for synchronizing a first
set of one or more states of the first node between the first
node and the one or more other nodes of the control network,
the node pairing information comprising pair node information
that identifies a second node of the control network and spare
node identification information that identifies a spare node
of the control network

22

Determining that the second node cannot be paired
with the first node

23

Upon determining that the second node cannot be paired
with the first node, performing the redundancy pairing
procedure for pairing with the spare node for synchronizing
a second set of one or more states of the first node
between the first node and the spare node

FIG. 4

20

**FIG. 5A**

Figure 30

Build-time "Engineering tool" (31) — Library

- Distributed Automation application editor: FB1 ↔ FB2
- Topology Editor (34)
  - Network configurator: dPAC1a | dPAC1b | dPAC2a | dPAC2b | Spare
  - Switched interlink + Agent configuration
- Fieldbus configurator (32): dPAC1 Driver1 | dPAC2 Driver2

Control network

dPAC1a (35_1a1, 35_1a2, 35_1a)
- Runtime: FB1
- Advanced Synchronization Agent: States
- Fieldbus protocol layer: Driver1

dPAC1b
- Runtime: FB1
- Advanced Synchronization Agent: States
- Fieldbus protocol layer: Driver1

dPAC2a
- Runtime: FB2
- Advanced Synchronization Agent: States
- Fieldbus protocol layer: Driver1

dPAC2b
- Runtime: FB2
- Advanced Synchronization Agent: States
- Fieldbus protocol layer: Driver1

Spare
- Runtime
- Advanced Synchronization Agent
- Fieldbus protocol layer

Switched Interlink Network (33)

Device Network (36)

35_1b1  35_1b  35_1b2  35_2a1  35_2a  35_2a2  35_2b1  35_2b  35_2b2  36

EP 4 760 426 A1

20

Design the automation application

41

Define the PACs used in the system and configure the associated Network Topology including switched interlink and spare nodes

42

Create the hardware configuration of the IO system relying on one or several fieldbus protocols

43

Map the automation application to the different PACs and associate the IO system

40

44

Connect to the network of the physical system and Deploy the application to the PACs

45

FIG. 5B

PAC1 (a) and PAC2 (a) are elected primary nodes in their respective pairs and execute the application

51

The synchronization agents running on all nodes ensure that states always synchronized in the different pairs to ensure the high-availability of the system

52

On PAC1 (b), a failure happens which makes the PAC1 (a) goes to single state.

53

50

Automatically, the advanced sync agent of PAC1 (a) decides to pair with the spare node and to do a hot-remarry

54

PAC1 (a) becomes primary again and spare node takes the role of the secondary in the corresponding pair.

55

## FIG. 5C

FIG. 6

Europäisches
Patentamt
European
Patent Office
Office européen
des brevets

# EUROPEAN SEARCH REPORT

**Application Number**

EP 24 30 7104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 715 970 A1 (HONEYWELL INT INC [US]) 30 September 2020 (2020-09-30) * paragraphs [0018] - [0027]; figures 2-5 * ----- | 1-14 | INV. G05B19/418 |
| Y | EP 2 813 912 A1 (ABB TECHNOLOGY AG [CH]) 17 December 2014 (2014-12-17) * paragraphs [0001], [0008], [0009], [0014] - [0016]; figure 3 * ----- | 1-14 | |
| Y | EP 1 096 751 A2 (SUN MICROSYSTEMS INC [US]) 2 May 2001 (2001-05-02) * paragraphs [0025] - [0028], [0040] - [0047]; figure 5 * ----- | 1-14 | |
| A | EP 3 702 857 A1 (ABB SCHWEIZ AG [CH]) 2 September 2020 (2020-09-02) * paragraphs [0070] - [0087] * ----- | 1-14 | |
| | | | **TECHNICAL FIELDS SEARCHED (IPC)** |
| | | | G05B |

The present search report has been drawn up for all claims

| Place of search | Date of completion of the search | Examiner |
|---|---|---|
| Munich | 20 May 2025 | Frey, Richard |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

...................................................................................

& : member of the same patent family, corresponding
  document

EPO FORM 1503 03.82 (P4C01)

## ANNEX TO THE EUROPEAN SEARCH REPORT
## ON EUROPEAN PATENT APPLICATION NO.

EP 24 30 7104

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | | Publication date | Patent family member(s) | | Publication date |
|---|---|---|---|---|---|
| EP 3715970 | A1 | 30-09-2020 | CN | 111752139 A | 09-10-2020 |
| | | | EP | 3715970 A1 | 30-09-2020 |
| | | | US | 2020310920 A1 | 01-10-2020 |
| EP 2813912 | A1 | 17-12-2014 | CN | 105556407 A | 04-05-2016 |
| | | | EP | 2813912 A1 | 17-12-2014 |
| | | | US | 2016085642 A1 | 24-03-2016 |
| | | | WO | 2014198860 A1 | 18-12-2014 |
| EP 1096751 | A2 | 02-05-2001 | AT | E347224 T1 | 15-12-2006 |
| | | | EP | 1096751 A2 | 02-05-2001 |
| | | | US | 6957254 B1 | 18-10-2005 |
| EP 3702857 | A1 | 02-09-2020 | CN | 111638970 A | 08-09-2020 |
| | | | EP | 3702857 A1 | 02-09-2020 |
| | | | US | 2020280615 A1 | 03-09-2020 |
| | | | US | 2021352158 A1 | 11-11-2021 |

EPO FORM P0459

For more details about this annex : see Official Journal of the European Patent Office, No. 12/82